(19) Europäisches Patentamt
European Patent Office
Office européen des brevets

(11) **EP 4 613 895 A1**

(12) **EUROPEAN PATENT APPLICATION**
published in accordance with Art. 153(4) EPC

(43) Date of publication:
**10.09.2025 Bulletin 2025/37**

(21) Application number: 23885836.9

(22) Date of filing: **01.11.2023**

(51) International Patent Classification (IPC):
$C22C\ 38/00^{(2006.01)}$    $C23C\ 22/00^{(2006.01)}$
$H01F\ 1/147^{(2006.01)}$    $C21D\ 8/12^{(2006.01)}$
$C21D\ 9/46^{(2006.01)}$    $C22C\ 38/60^{(2006.01)}$

(52) Cooperative Patent Classification (CPC):
**C22C 38/00; C23C 22/00; H01F 1/147;** C21D 8/12;
C21D 9/46; C22C 38/60; Y02P 10/20

(86) International application number:
**PCT/JP2023/039510**

(87) International publication number:
**WO 2024/096082 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2022 JP 2022175577**

(71) Applicant: NIPPON STEEL CORPORATION
Chiyoda-ku
**Tokyo 100-8071 (JP)**

(72) Inventors:
• **YASUDA, Masato**
**Tokyo 100-8071 (JP)**
• **MORISHIGE, Nobusato**
**Tokyo 100-8071 (JP)**
• **TAKATANI, Shinsuke**
**Tokyo 100-8071 (JP)**
• **YAMAMOTO, Shinji**
**Tokyo 100-8071 (JP)**
• **HAMAMURA, Hideyuki**
**Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTROMAGNETIC STEEL SHEET**

(57) The present invention has as its object the provision of grain-oriented electrical steel sheet excellent in core loss not having a forsterite coating (glass coating) and treated for heatproof magnetic domain control.

The grain-oriented electrical steel sheet according to the present invention does not have a forsterite coating on the surface of the base steel sheet, but is provided with a tension coating (insulating coating), has a plurality of grooves on the surface, has an $SiO_2$ intermediate layer and insulating coating in that order on the steel sheet surface, and has a coating tension of the tension coating of 10 MPa or more. Furthermore, it has an $SiO_2$ internal oxidation layer right under the surface of the base steel sheet and has asperities of the internal oxidation layer of 0.001 μm or more and 0.100 μm or less.

Fig. 1

**Description**

FIELD

The present invention relates to grain-oriented electrical steel sheet.

BACKGROUND

Grain oriented electrical steel sheet is mainly used for transformers. Transformers are continuously excited and continuously suffer from energy loss over the long period from when the transformers are installed to when they are scrapped, so the energy loss at the time of magnetization by an alternating current, that is, the core loss, is a major indicator determining the value of transformers.

Numerous techniques have been proposed up to now for reducing the core loss of grain-oriented electrical steel sheet. For example, there have been the technique of controlling the steel sheet structure to the {110}<001>orientation known as the Goss orientation, the technique of raising the contents of Si and other dissolved elements in the steel sheet raising the electrical resistance, the technique of making the steel sheet thinner, etc.

Further, it is known that imparting tension to steel sheet is an effective technique for reducing core loss. For that reason, usually, a coating is formed on the surface of the grain-oriented electrical steel sheet for the purpose of making the core loss fall. This coating imparts tension to the grain-oriented electrical steel sheet to thereby cause the core loss of the steel sheet as a sheet to fall. This coating further secures electrical insulation between steel sheets when using grain-oriented electrical steel sheets stacked together to thereby cause the core loss as a core to fall.

In grain-oriented electrical steel sheet on which a coating is formed, sometime the surface of the base steel sheet is formed with an oxidation coating containing Mg, called a forsterite coating, and further is formed with an insulating coating on the surface of that forsterite coating (hereafter, also referred to as a "glass coating"). That is, in this case, the coating on the base steel sheet includes the forsterite coating and insulating coating (hereafter, also referred to as the "tension coating"). Each of the forsterite coating and insulating coating performs both functions of an insulation function and function of imparting tension to the base steel sheet.

The forsterite coating is an oxidation coating containing Mg. It is formed by the annealing separator mainly comprised of magnesia (MgO) and the silicon oxide ($SiO_2$) formed on the base steel sheet at the time of decarburization annealing reacting during the heat treatment performed at 900 to 1200°C for 30 hours or more in the finish annealing for causing secondary recrystallization at the steel sheet.

The insulating coating is formed by coating a base steel sheet after finish annealing with, for example, a coating solution containing phosphoric acid or a phosphate, colloidal silica, or chromic anhydride or chromate and drying at 300 to 950°C for 10 seconds or more.

In order for the insulating coating to exhibit the insulation function and the function of imparting tension to the base steel sheet, a high adhesion is demanded between these coatings and the base steel sheet.

In the past, the adhesion between an insulating coating and steel sheet had mainly been secured by the anchoring effect by asperities at the interface of the base steel sheet and forsterite coating. However, in recent years, it had become clear that the asperities at the interface also become obstacles to movement of domain walls when grain-oriented electrical steel sheet is magnetized, so also become factors obstructing lower core loss.

Therefore, to further lower the core loss, the art has been proposed of securing adhesion of the insulating coating in a state smoothening the interface without the presence of a forsterite coating in the oxidation coating containing Mg.

For example, PTL 1 proposes the art of removing the forsterite coating by pickling etc., smoothening the base steel sheet surface by chemical polishing or electrolytic polishing, then thinly metal plating the surface. PTL 2 proposes the art of using an annealing separator containing alumina ($Al_2O_3$) at the time of finish annealing so as to suppress the very formation of a forsterite coating and smoothen the base steel sheet surface.

However, if grain-oriented electrical steel sheet not having a forsterite coating is not treated for non-heatproof magnetic domain control such as by imparting strain by laser or electron beam, the core loss may be sacrificed. On the other hand, even if treated for non-heatproof magnetic domain control such as by imparting strain by laser or electron beam, the sheet cannot be used as a material for wound core transformers requiring annealing in the transformer manufacturing process.

Therefore, PTL 3 proposes heatproof magnetic domain control using a press. However, if not having a forsterite coating, sometimes the shape of the steel sheet will be affected after magnetic domain control (after pressing).

Further, in grain-oriented electrical steel sheet not having a forsterite coating, even if imparting a tension coating, since there is no forsterite coating, the total coating tension becomes smaller. If the coating tension is small, even if pressing or otherwise in heatproof magnetic domains, the effect of improvement of the core loss becomes small, so grain-oriented electrical steel sheet not having a forsterite coating becomes inferior in core loss compared with grain-oriented electrical steel sheet having a forsterite coating.

[CITATIONS LIST]

[PATENT LITERATURE]

[PTL 1] Japanese Unexamined Patent Publication No. 49-096920
[PTL 2] WO2002/088403
[PTL 3] Japanese Examined Patent Publication No. 62-053579
[PTL 4] WO2020/149321

SUMMARY

[TECHNICAL PROBLEM]

The present invention was made in consideration of the above problem, has as its technical problem the improvement of the core loss of grain-oriented electrical steel sheet not having a forsterite coating and treated for heatproof magnetic domain control, and has as its object the provision of such excellent core loss grain-oriented electrical steel sheet.

[SOLUTION TO PROBLEM]

The inventors engaged in intensive studies for solving the above technical problem. As a result, they discovered that it is possible to specially modify the steel sheet production process and produce grain-oriented electrical steel sheet excellent in core loss and steel sheet shape even if not having a forsterite coating. The present invention was made based on the above findings and has as its gist the following:
[1] The grain-oriented electrical steel sheet according to one aspect of the present invention is grain-oriented electrical steel sheet steel having a plurality of grooves in a surface, having an $SiO_2$ intermediate layer and insulating coating in that order on the surface of the steel sheet forming the base material, having a coating tension of the insulating coating of 10 MPa or more, and not having a forsterite coating.

[2] The grain-oriented electrical steel sheet according to [1], in which grain-oriented electrical steel sheet, in each of the grooves, an absolute value of an angle $\theta$ formed by a direction perpendicular to a rolling direction and a sheet thickness direction and a longitudinal direction of the groove is 0 to 40°, a width W of the groove is 20 to 300 $\mu$m, a depth D of the groove is 10 to 50 $\mu$m, and a pitch P of the grooves in the rolling direction is 1.0 to 30.0 mm.

[3] The grain-oriented electrical steel sheet according to [1] or [2], having an $SiO_2$ internal oxidation layer right under the surface of the steel sheet forming the base material.

[4] The grain-oriented electrical steel sheet according to any one of [1] to [3], wherein in a sheet thickness direction cross-section of the steel sheet, an asperity height of the interface of the $SiO_2$ internal oxidation layer and the steel sheet forming the base material is 0.001 $\mu$m or more and 0.100 $\mu$m or less in the sheet thickness direction of the steel sheet.

[5] The grain-oriented electrical steel sheet according to any one of [1] to [4], wherein the grooves are formed by etching or lasering.

[ADVANTAGEOUS EFFECTS OF INVENTION]

According to the present invention, it is possible to provide grain-oriented electrical steel sheet not having a forsterite coating and excellent in magnetic properties.

BRIEF DESCRIPTION OF DRAWINGS

FIG. 1 is a view showing an outline of electrical steel sheet formed with grooves.
FIG. 2 is a sheet thickness direction cross-sectional (cross-section vertical to steel sheet surface) view of electrical steel sheet according to the present invention and a schematic view for explaining a coating structure of electrical steel sheet.

DESCRIPTION OF EMBODIMENTS

Hereafter, the present invention will be explained taking as an example grain-oriented electrical steel sheet according to one embodiment of the present invention (hereafter, referred to as the "present electrical steel sheet").

<Insulating Coating Tension>

The present electrical steel sheet is comprised of a base steel sheet having a plurality of grooves on its surface. It does not have a forsterite coating (glass coating) on the surface of that base steel sheet, but can be given an insulating coating having a tension of the insulating coating of 10 MPa or more and can realize an excellent core loss. The tension of the insulating coating is preferably 11 MPa or more, 12 MPa or more, 13 MPa or more, 14 MPa or more, or 15 MPa or more.

The tension of the insulating coating can, for example, be measured by cutting the present electrical steel sheet into $30 \times 300$ mm, removing the insulating coating at one side, then fastening one end of the steel sheet (either short side), measuring the warping of the steel sheet, and finding the tension from the following formula (1):

$$\sigma = 1.39 \times t \times \chi / T \dots \text{ formula (1)}$$

where

σ: insulating coating tension (MPa)
t: sheet thickness after removal of one side insulating coating (mm)
T: sheet thickness before removal of one side insulating coating (mm)
χ: warping (mm)

The constituents of the insulating coating are not particularly limited, but the coating is preferably formed by coating a water-based coating solution (insulating coating forming solution) mainly comprised of a phosphate and colloidal silica. As the phosphate, for example, a phosphate of Ca, Al, Sr, etc. is preferable, but among these, aluminum phosphate is more preferable. The type of colloidal silica is also not particularly limited. The particle size (average particle size) can be suitably selected. However, if the particle size is more than 200 nm, the colloidal silica will sometimes precipitate in the treatment solution, so the particle size of the colloidal silica (number-based average particle size) is preferably made 200 nm or less, more preferably 190 nm or less, 180 nm or less, or 170 nm or less.

The thickness of the insulating coating is also not particularly limited. However, if the coating thickness is small, tension will be hard to form, so the coating thickness may be made 3 μm or more, preferably 4 μm or more, 5 μm or more, or 6 μm or more. On the other hand, if the coating thickness is too great, the ratio of the nonmagnetic layer in the steel sheet becomes greater and the magnetic flux density falls leading to the core loss worsening, so the coating thickness may be made 30 μm or less, preferably 25 μm or less or 20 μm or less.

<SiO$_2$ Intermediate Layer>

It is difficult to form a high tension insulating coating on electrical steel sheet not having a glass coating acting to anchor the insulating coating on the steel sheet surface. The inventors discovered that by suitably controlling the baking range of the insulating coating, it is possible to form a high tension insulating coating. The mechanism is not clear, but it is thought that in the annealing for baking the insulating coating, an intermediate layer of SiO$_2$ (SiO$_2$ intermediate layer) is formed and that performs an anchoring role, so the insulating coating is adhered and increase of tension becomes possible.

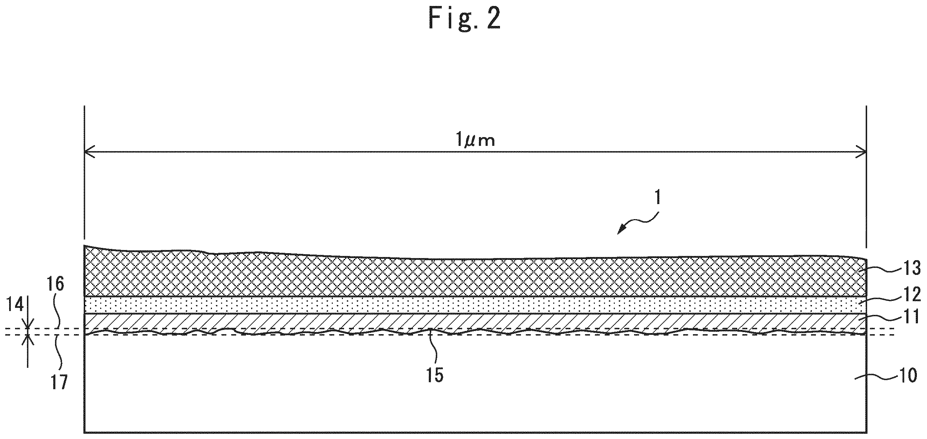

As shown in FIG. 2, the cross-section of the electrical steel sheet 1 according to the present invention is comprised of a steel sheet 10 forming the base material, an SiO$_2$ internal oxidation layer 11 right under that base steel sheet surface, an SiO$_2$ intermediate layer 12 on that base steel sheet surface, and an insulating coating 13 on top of that in that order. It is believed that the base steel sheet and the SiO$_2$ are close in lattice constant, so the lattice match is good, the base steel sheet surface 10 has the internally oxidized SiO$_2$ formed in the finish annealing (SiO$_2$ internal oxidation layer 11) present on it, and an SiO$_2$ intermediate layer 12 is formed on that, so the crystal structure become stable. Further, the insulating coating 13 is mainly comprised of SiO$_2$ and is formed on the SiO$_2$ intermediate layer 12, so again the crystal structure becomes stable. Therefore, due to the presence of the SiO$_2$ intermediate layer 12, it is believed that a joined state more powerful that the steel sheet and insulating coating 13 directly contacting is formed and as a result a higher tension of the insulating coating is obtained. The SiO$_2$ intermediate layer 12 can be confirmed by examining the sheet thickness direction cross-section of the electrical steel sheet formed with the insulating coating 13.

<SiO$_2$ Internal Oxidation Layer>

If forming an SiO$_2$ internal oxidation layer 11 on the surface of the electrical steel sheet 10 not having a glass coating and forming on top of that an SiO$_2$ intermediate layer 12 and a high tension insulating coating 13, it becomes possible to make the adhesion between the insulating coating and the steel sheet stronger. The mechanism by which the adhesion becomes stronger has not been elucidated, but the SiO$_2$ internal oxidation layer 11 is formed on the steel sheet surface along with fine asperities, so it is believed that the anchoring effect of the SiO$_2$ intermediate layer is made stronger.

The asperity structure of the SiO$_2$ internal oxidation layer and the steel sheet surface can be confirmed by examination by TEM of the sheet thickness direction cross-section (cross-section vertical to steel sheet surface) of the electrical steel sheet formed with the insulating coating. It is possible to confirm a surface position of the steel sheet 10 forming the base material by EDS analysis and the contrast of the bright field image and confirm the SiO$_2$ internal oxidation layer right under the steel sheet surface forming the base material. In the TEM image of the steel sheet thickness direction cross-section, the interface between the base steel sheet and the SiO$_2$ internal oxidation layer (appearing in curved shape at cross-sectional figure, so the curve is called an "interface curve") is identified. The asperity structure of the SiO$_2$ internal oxidation layer and steel sheet surface can be evaluated by the asperities of this interface. As explained in FIG. 2, at any selected width 1 $\mu$m examined surface, by measuring the distance between a line 16 connecting the steel sheet surface side front end parts of the interface curve 15 between the base steel sheet 10 and SiO$_2$ internal oxidation layer 11 and a line 17 connecting the steel sheet center side front end parts 17 of the interface curve 15 (called the "asperity height 14"), it is possible to evaluate the asperity structure of the SiO$_2$ internal oxidation layer and steel sheet surface. If the line 16 connecting the steel sheet surface side front end parts of the interface curve 15 and the line 17 connecting the steel sheet center side front end parts are not parallel, the arithmetic average value of the distances between the two ends of the lines (two ends of width 1 $\mu$m examined surface) may be deemed the distance between the two lines (asperity height 14).

The asperity structure (asperity height) of the SiO$_2$ internal oxidation layer and steel sheet surface is preferably 0.001 $\mu$m or more and 0.100 $\mu$m or less. If the asperity structure (asperity height) of the SiO$_2$ internal oxidation layer and steel sheet surface is too shallow, the effect of strengthening the adhesion of the insulating coating by formation of the internal oxidation layer is not obtained, so the asperity structure (asperity height) is preferably 0.001 $\mu$m or more, more preferably is 0.003 $\mu$m or more, 0.005 $\mu$m or more, 0.010 $\mu$m or more, or 0.020 $\mu$m or more. If the asperity structure (asperity height) of the SiO$_2$ internal oxidation layer and steel sheet surface is too deep, the core loss deteriorates, so the structure is preferably 0.100 $\mu$m or less, more preferably is 0.095 $\mu$m or less, 0.090 $\mu$m or less, 0.085 $\mu$m or less, or 0.080 $\mu$m or less.

<<Grooves at Steel Sheet Surface>>

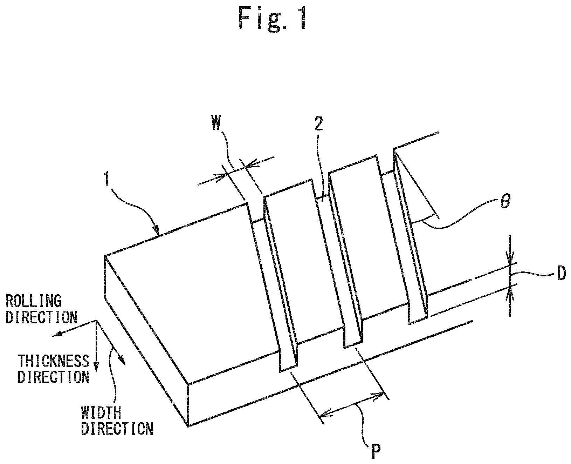

As shown in FIG. 1, at the surface of the base steel sheet, a plurality of grooves are formed so as to adjoin each other in the rolling direction of the base steel sheet. The direction of the grooves (angle 0) and the width W, depth D, and pitch P of the grooves are determined considering the core loss in the same way as with ordinary grain-oriented electrical steel sheet.

<Angle $\theta$ Formed by Longitudinal Direction of Base Material Steel Sheet and Longitudinal Direction of Grooves>>

If the angle $\theta$ formed by the direction perpendicular to the rolling direction and sheet thickness direction of the base steel sheet (sheet width direction) and the longitudinal direction of the groove is too large, there is no effect of magnetic domain control and the effect of improvement of the core loss can no longer be obtained, so the angle is made 40° or less. The angle $\theta$ is preferably small and may be 35° or less, 30° or less, 25° or less, 20° or less, 15° or less, 10° or less, 8° or less, 6° or less, or 5° or less. The lower limit of the angle $\theta$ is 0°, that is, the time when the longitudinal direction of the grooves is parallel to the sheet width direction. Note that, the direction of the angle $\theta$ is not an issue. The angle of the acute angle side among the angles formed by the longitudinal direction of the grooves and sheet width direction is indicated. The surface of the base steel sheet has a plurality of grooves arranged on it substantially in parallel, but the angle $\theta$ of each groove should be in the range as explained above.

<Groove Width W>

The groove width W indicates the width of a groove at the base steel sheet surface at the cross-section of the groove at a surface vertical to the longitudinal direction of the groove (groove cross-section). Even if the groove width W is too narrow, the groove does not become a starting point of formation of magnetic poles, there is no effect of magnetic domain control, and good core loss cannot be obtained, so the width may be made 20 $\mu$m or more. On the other hand, if too wide, the groove does not become a starting point of formation of magnetic poles, there is no effect of magnetic domain control, and just the magnetic flux density ends up remarkably falling and good core loss cannot be obtained, so the width may be made 300 μm or less. The lower limit of the groove width W is preferably 25 μm, 30 μm, or 35 μm. The upper limit of the groove width W is preferably 250 μm, 200 μm, 150 μm, 100 μm, or 80 μm.

<Groove Depth D>

If the groove depth D is too shallow, a groove does not become a starting point of formation of magnetic poles, there is no effect of magnetic domain control, and good core loss cannot be obtained, so the depth may be made 10 μm or more. On the other hand, if too deep, the effect of magnetic domain control ends up reaching the saturation point and only the magnetic flux density remarkably falls, so a good core loss cannot be obtained, therefore the depth may be made 40 μm or less. The lower limit of the groove depth D is preferably 11 μm, 12 μm, 13 μm, 14 μm, or 15 μm. The upper limit of the groove depth D is preferably 38 μm, 36 μm, 34 μm, 32 μm, 30 μm, 28 μm, or 26 μm.

<Groove Pitch P>

The groove pitch P is the distance of longitudinal direction center lines of the grooves arranged substantially in parallel at the base steel sheet surface with the adjoining grooves and indicates the distance in the rolling direction of the base steel sheet. The center line of a groove is a line passing through a center point of the groove in the base steel surface at a groove cross-section and parallel to the longitudinal direction of the groove. If the groove pitch P is too narrow, the effect of magnetic domain control becomes saturated and just the magnetic flux density remarkably falls, so good core loss is not obtained, therefore the pitch may be made 1 mm, or more. On the other hand, if too broad, the effect of magnetic domain control is not sufficiently obtained and good core loss is not obtained, therefore the pitch may be made 30 mm, or less. The pitches P of the grooves need not be equal pitches, but the groove pitch P with an adjoining groove should be within this range. The lower limit of the groove pitch P is preferably 1.2 mm, 1.4 mm, 1.5 mm, 1.6 mm, 1.8 mm, or 2.0 mm. The upper limit of the groove pitch P is preferably 25.0 mm, 20.0 mm, 15.0 mm, 10.0 mm, 7.0 mm, or 5.0 mm.

<<Method of Production>>

One example of a method of production of the present electrical steel sheet will be explained next. First, a known method is used to produce cold rolled steel sheet for use for the present electrical steel sheet. The steel sheet constituents and the method of production of the cold rolled steel sheet are not particularly limited. A known method, for example, the steel sheet constituents and method of production of steel sheet described in PTL 4 can be employed. Specifically, one example of the specific steps will be explained hereafter, but the present invention is not limited to this example of the steps.
(i) Hot rolling step for hot rolling steel slab having predetermined chemical composition to obtain hot rolled steel sheet
In accordance with need, there may also be a hot rolled sheet annealing step for annealing the hot rolled steel sheet and a hot rolled sheet pickling step for pickling the hot rolled steel sheet or hot rolled annealed steel sheet.
(ii) Cold rolling step for cold rolling the hot rolled steel sheet one time or two or more times interspaced with process annealing to obtain cold rolled steel sheet
(iii) Decarburization annealing step for annealing the cold rolled steel sheet for decarburization and in accordance with need performing nitriding to obtain decarburized annealed sheet
(iv) Annealing separator coating step for coating the decarburized annealed sheet and making it dry
(v) Finish annealing step for finish annealing the decarburized annealed sheet on which the annealing separator is coated and obtaining the finish annealed steel sheet
(vi) Annealing separator removal step for removing the excess annealing separator from the surface of the finish annealed steel sheet by a method including one or both of rinsing or pickling
(vii) Insulating coating formation step for forming an insulating coating on the surface of the finish annealed steel sheet
(viii) Magnetic domain control step for magnetic domain control

Note that, the magnetic domain control step forms grooves at the steel sheet surface and can be performed on the steel sheet after cold rolling, after decarburization annealing, after decarburization and nitriding annealing, or after finish annealing or at the steel sheet given a tension coating.

<Steel Sheet Constituents>

As explained above, the steel sheet constituents are not particularly limited. As explained above, for example, the steel sheet constituents described in PTL 4 may also be employed. Further, for example in hot rolled steel sheet, it is possible to employ a composition comprised of, by mass%, C: 0.030 to 0.100%, Si: 0.80 to 7.00%, Mn: 0.01 to 1.00%, S+Se: 0.060% or less, acid soluble Al: 0.010 to 0.065%, and N: 0.004 to 0.012%% or less and having a balance of Fe and impurities. The reasons for limitation of the chemical composition of the steel slab in this case will be explained next. Hereafter, unless otherwise indicated, "%" relating to the chemical composition means "mass%".

[C: 0.030 to 0.100%]

C (carbon) is an element effective for control of the primary recrystallization structure, but the magnetic properties are detrimentally affected, so is an element to be removed by decarburization annealing before the finish annealing. If the C content of the steel slab is large, the decarburization annealing time becomes longer and the productivity falls, so the C content may be made 0.100% or less. Preferably, it is 0.085% or less, more preferably 0.070% or less.

The lower the C content the more preferable. While not particularly limited, if considering the productivity in industrial production and the magnetic properties of the products, the substantive lower limit of the C content may be made 0.030%.

[Si: 0.80 to 7.00%]

Silicon (Si) raises the electrical resistance of steel sheet and lowers the core loss. If the Si content is small, at the time of finish annealing, $\gamma$ (austenite) transformation occurs and the crystal orientation of the grain-oriented electrical steel sheet ends up being impaired, so the Si content may be made 0.80% or more. The Si content is preferably 1.00% or more, 1.50% or more, 2.00% or more, more preferably 2.50% or more.

On the other hand, if the Si content is large, the cold workability falls and cracking easily occurs at the time of cold rolling, so the Si content may be 7.00% or less. The Si content is preferably 6.50% or less, 5.00% or less, or 4.50% or less, more preferably 4.00% or less.

[Mn: 0.01 to 1.00%]

Manganese (Mn) also raises the electrical resistance of steel sheet and lowers the core loss. Further, Mn bonds with S or Se to form MnS or MnSe and functions as an inhibitor. If the Mn content is too small or is too great, the secondary recrystallization will not be stable, so the Mn content may be made 0.01% or more and 1.00% or less. The preferable lower limit of the Mn content is 0.03%, 0.05%, or 0.08% and is more preferably 0.09%. The preferable upper limit of the Mn content is 0.80%, 0.50%, 0.30%, or 0.20%.

[Either of S and Se or Total of Both: 0.060% or Less]

S (sulfur) and Se (selenium) bond with Mn to form MnS and/or MnSe and functions as an inhibitor.

If the total content of S and Se (S+Se) becomes greater, after hot rolling, the precipitation and dispersion of MnS and MnSe become uneven. In this case, the desired secondary recrystallization structure cannot be obtained, the magnetic flux density falls, MnS remains after purification, and the hysteresis loss becomes worse. For this reason, the total content of S and Se may be made 0.060% or less. The lower limit is not particularly prescribed. Mn need not be contained (0%), but to reliably obtain its effect, the content may be preferably 0.003% or more, 0.005% or more, 0.010% or more, or 0.015% or more.

[Acid Soluble Al (Sol. Al): 0.010 to 0.065%]

Acid soluble Al (aluminum) (sol. Al) bonds with N to form AlN or (Al, Si)N and functions as an inhibitor. If the acid soluble Al is small, the effect will not be sufficiently manifested and the secondary recrystallization will not sufficiently proceed, so the acid soluble Al content may be made 0.010% or more. The acid soluble Al content is preferably 0.015% or more, more preferably 0.020% or more. On the other hand, if the acid soluble Al content is large, the precipitation and dispersion of AlN or (Al, Si)N becomes uneven, the required secondary recrystallization structure is not obtained, and the magnetic flux density falls, so the acid soluble Al (sol. Al) may be made 0.065% or less. The acid soluble Al is preferably 0.055% or less, more preferably 0.050% or less.

[N: 0.004 to 0.012%]

N (nitrogen) bonds with Al to form AlN or (Al, Si)N and functions as an inhibitor. If the N content is small, AlN and (Al, Si)N are insufficiently formed, so N may be made 0.004% or more. Preferably, it may be 0.005% or more, 0.006% or more, or 0.007% or more. On the other hand, if the N content is large, there is a concern that the steel sheet will be formed with blisters (air pockets), so the N content is made 0.012% or less.

[Cr: 0% or More and 0.30% or Less]

Cr (chromium) need not particularly be included, but in the same way as Si, is an element effective for raising the electrical resistance and reducing the core loss. Therefore, it may be made to be included. To reliably obtain this effect, the Cr content is preferably 0.02% or more, more preferably 0.05% or more.

On the other hand, if the Cr content is large, the drop in magnetic flux density becomes a problem, so the upper limit of the Cr content may be 0.30%. It is preferably 0.20% or 0.12%.

[Cu: 0% or More and 0.40% or Less]

Cu (copper) also need not particularly be included, but is an element effective for raising the electrical resistance and reducing the core loss. Therefore, it may be made to be included. If reliably obtaining its effect, the Cu content is preferably 0.05% or more, more preferably is 0.10% or more.

On the other hand, if the Cu content is large, the effect of reduction of the core loss ends up being saturated and at the time of hot rolling, surface defects called "balding" are sometimes caused. For this reason, the upper limit of the Cu content may be 0.40%. Preferably, it may be 0.30% or may be 0.20%.

[P: 0% or More and 0.50% or Less]

P (phosphorus) also need not particularly be included, but is an element effective for raising the electrical resistance and reducing the core loss. Therefore, it may be made to be included. If reliably obtaining its effect, the P content is preferably 0.005% or more, more preferably is 0.010% or more.

On the other hand, if the P content is large, sometimes problems arise in the rollability, so the upper limit of the P content may be 0.50%. Preferably, it may be 0.20% or may be 0.15%.

[Sn: 0% or More and 0.30% or Less]

[Sb: 0% or More and 0.30% or Less]

Sn (tin) and Sb (antimony) need not particularly be included, but are elements effective for stabilizing the secondary recrystallization and increasing the Goss orientation ({110}<001> orientation). Therefore, they may be made to be included. If reliably obtaining their effect, the Sn content is 0.02% or more, preferably may be 0.05% or more, while the Sb content is, 0.01% or more, preferably may be 0.03% or more.

On the other hand, if Sn or Sb is large, the magnetic properties are liable to be detrimentally affected. For this reason, the upper limits of the Sn content and Sb content may respectively be made 0.30%. The upper limits of the Sn content and Sb content are more preferably respectively 0.15% or 0.10%.

[Ni: 0% or More and 1.00% or Less]

Ni (nickel) also need not particularly be included, but is an element effective for raising the electrical resistance and reducing the core loss. Further, Ni is an element controlling the metallographic structure of the hot rolled steel sheet and effective in raising the magnetic properties. Therefore, it may be made to be included. If reliably obtaining its effect, the Ni content is preferably 0.01% or more, more preferably 0.02% or more.

On the other hand, if the Ni content is large, the secondary recrystallization sometimes becomes unstable, so the Ni content may be made 1.00% or less, preferably 0.20% or less or 0.10% or less.

[B: 0% or More and 0.008% or Less]

B (boron) need not particularly be included, but it bonds with N to form BN and exhibits an inhibitor effect. Therefore, it may be made to be included. If reliably obtaining its effect, the B content is preferably 0.0005% or more, more preferably 0.001% or more.

On the other hand, if the B content is large, the magnetic properties are liable to be detrimentally affected, so the upper limit of the B content may be 0.008% and may be preferably 0.005% or 0.003%.

[V: 0% or More and 0.15% or Less]

[Nb: 0% or More and 0.20% or Less]

[Ti: 0% or More and 0.015% or Less]

V (vanadium), Nb (niobium), and Ti (titanium) need not particularly be included, but are elements which bond with N or C and function as inhibitors. Therefore, they may be made to be included. If reliably obtaining their effects, the V content is preferably 0.002% or more, more preferably 0.010% or more. The Nb content is preferably 0.005% or more, more preferably 0.020% or more. The Ti content is preferably 0.002% or more, more preferably 0.004% or more.
On the other hand, if including V, Nb, and Ti in large amounts, the magnetic properties of the final product (electrical steel sheet) are liable to deteriorate. For this reason, the upper limit of the V content may be 0.150%, preferably is 0.100% or 0.050%. The upper limit of the Ti content may be 0.0150%, preferably is 0.010% or 0.008%. The upper limit of the Nb content may be 0.200%, preferably is 0.100% or 0.080%.

[Mo: 0% or More and 0.10% or Less]

Mo (molybdenum) also need not particularly be included, but is an element effective for raising the electrical resistance and reducing the core loss. Therefore, it may be made to be included. If reliably obtaining its effect, the Mo content is preferably 0.005% or more, more preferably is 0.01% or more.
On the other hand, if the Mo content is large, sometimes a problem arises in the rollability of the steel sheet, so the upper limit of the Mo content may be 0.10%, preferably is 0.08% or 0.05%.

[Bi: 0% or More and 0.010% or Less]

Bi (bismuth) need not particularly be included, but is an element effective for stabilizing the sulfides and other precipitates and strengthening the function as an inhibitor. Therefore, it may be made to be included. If reliably obtaining its effect, the Bi content is preferably 0.001% or more, more preferably 0.002% or more.
On the other hand, if the Bi content is great, the magnetic properties will sometimes be detrimentally affected, so the upper limit of the Bi content may be 0.010%, preferably 0.008% or 0.006%.
The balance aside from the above elements is comprised of Fe and impurities. Here, the "impurities" are constituents entering due to materials such as ore and scrap and various factors in the production process at the time of industrially producing steel and allowable in a range not detrimentally affecting the present invention.

<Method of Production>

Next, one example of an embodiment relating to a method of production of the electrical steel sheet according to the present invention will be explained. The method of production of the electrical steel sheet according to the present invention is not limited to the embodiment explained here however.

<Hot Rolling Step>

The method of production of the steel slab (slab) supplied to the hot rolling step is not limited. For example, molten steel having a predetermined chemical composition may be smelted and that molten steel may be used to produce a slab. The slab may be produced by continuous casting. Molten steel also may be used to produce an ingot and the ingot bloomed to produce a slab. Further, another method may be used to produce a slab.
The thickness of the slab is not particularly limited, but, for example, is 150 to 350 mm. The thickness of the slab is preferably 220 to 280 mm. As the slab, a so-called "thin slab" with a thickness of 10 to 70 mm may be used.
Continuing, the conditions when hot rolling the above steel slab will be explained.
The hot rolling conditions are not particularly limited. For example, the following conditions may be used.
The slab is heated before the hot rolling. The slab is loaded into a known heating furnace or known soaking furnace to heat it. As one method, the slab is heated to become 1100°C or more and 1280°C or less. By making the heating temperature of the slab 1280°C or less, for example, the various problems when heating by a temperature higher than 1280°C (requiring dedicated heating furnace, large amount of molten scale, etc.) can be avoided. If the heating temperature is too low, the hot rolling becomes difficult and the productivity sometimes falls. Therefore, the heating temperature may be set considering the productivity at 1280°C or less in range. The preferable lower limit of the heating temperature of the slab is 1100°C. The preferable upper limit of the heating temperature of the slab is 1250°C.
Further, as another method, the slab may be heated to a 1320°C or more high temperature. By heating by a 1320°C or more high temperature, it is possible to make the AlN, Mn(S,Se) melt then make it finely precipitate at a later step so as to stably realize secondary recrystallization. The upper limit temperature in this case is 1350°C at which the slab melts.
The slab heating step itself can be omitted. It is also possible to start the hot rolling after casting before the temperature of the slab falls to a predetermined temperature.

Next, the heated slab is hot rolled. The hot rolling mill is, for example, provided with a rough rolling mill and a finish rolling mill arranged downstream of the rough rolling machine. The rough rolling mill is provided with rough rolling stands arranged in a line. Each rough rolling stand includes a plurality of rolls arranged vertically. This finish rolling mill is similarly provided with finish rolling stands arranged in a line. Each finish rolling stand includes a plurality of rolls arranged vertically. The heated steel material is rolled by the rough rolling mill, then is further rolled by the finish rolling mill to produce a hot rolled steel sheet. The finishing temperature at the hot rolling step (steel sheet temperature at exit side of finish rolling stand finally rolling the steel sheet at the finish rolling mill) is, for example, 700 to 1150°C. Due to the above hot rolling step, hot rolled steel sheet is produced.

<Hot Rolled Sheet Annealing Step>

In the hot rolled sheet annealing step, in accordance with need, the hot rolled steel sheet obtained by the hot rolling step is annealed (hot rolled sheet annealing) to obtain hot rolled annealed sheet.

The hot rolled sheet annealing is performed for the purpose of making the asperity structure formed at the time of hot rolling as uniform as possible and controlling precipitation of the inhibitor AlN (fine precipitation) and controlling the second phase/dissolved carbon etc. The annealing conditions may be selected from known conditions in accordance with the purpose. For example, if making the asperity structure formed at the time of hot rolling uniform, the hot rolled steel sheet may be held at an annealing temperature (furnace temperature in hot rolled sheet annealing furnace) of 750 to 1200°C for 30 to 600 seconds.

Hot rolled sheet annealing does not necessarily have to be performed. Whether or not to perform the hot rolled sheet annealing step may be determined in accordance with the properties demanded from the finally produced grain-oriented electrical steel sheet and production costs.

<Hot Rolled Sheet Pickling Step>

In the hot rolled sheet pickling step, the hot rolled steel sheet after the hot rolling step or the hot rolled annealed sheet after the hot rolled sheet annealing step is pickled in accordance with need for removing the scale formed on the surface. The pickling conditions are not particularly limited. The pickling may be performed under known conditions.

<Cold Rolling Step>

At the cold rolling step, the hot rolled steel sheet or hot rolled annealed sheet after the hot rolling step, after the hot rolled sheet annealing step, or after the hot rolled sheet pickling step is cold rolled one time or two times or more with process annealing interposed so as to obtain cold rolled steel sheet.

The preferable cold rolling rate in the final cold rolling is 80% or more, more preferably is 90% or more. The preferable upper limit of the cold rolling rate is 95%.

Here, the cold rolling rate (%) is defined as follows:

Cold rolling rate (%)=(1-thickness of steel sheet after present cold rolling/thickness of steel sheet before present cold rolling)$\times$100

<Decarburization Annealing Step>

In the decarburization annealing step, the cold rolled steel sheet produced by the cold rolling step is annealed for decarburization to cause primary recrystallization.

In the decarburization annealing, the steel sheet is held at an annealing temperature of 750 to 900°C for 10 to 600 seconds with a degree of oxidation in the annealing atmosphere (furnace atmosphere) ($PH_2O/PH_2$ : ratio of partial pressure of water vapor and hydrogen) of 0.01 to 0.15.

If the degree of oxidation ($PH_2O/PH_2$ ) is too small, the decarburization speed becomes slower and the productivity falls. Not only that, poor decarburization occurs and the magnetic properties after the finish annealing deteriorate. On the other hand, if the degree of oxidation becomes too large, Fe-based oxides become easily formed and flattening the interface after finish annealing becomes difficult. For this reason, the degree of oxidation may be 0.01 or more and 0.15 or less.

If the annealing temperature is too low, not only does the decarburization speed become slower and the productivity fall, but also poor decarburization occurs and the magnetic properties after the finish annealing deteriorate. On the other hand, if the annealing temperature is too high, the primary recrystallized particle size ends up exceeding the desired size, so the magnetic properties after the finish annealing deteriorate. For this reason, the annealing temperature may be made 750°C or more and 900°C or less.

If the holding time is too short, decarburization cannot be sufficiently performed. On the other hand, if the holding time is too long, the productivity falls and the primary recrystallized particle size ends up exceeding the desired size, so the magnetic properties after the finish annealing deteriorates. For this reason, the holding time may be 10 seconds or more and 600 seconds (10 minutes) or less.

<Nitriding>

In the decarburization annealing step, the steel sheet may be nitrided in accordance with need. In the decarburization annealing step, by further performing nitriding, AlN or (Al,Si)N or another inhibitor is formed before the secondary recrystallization of the finish annealing step, so secondary recrystallization can be stably realized.

The conditions of the nitriding are not particularly limited, but the nitriding is preferably performed so that the nitrogen content near the steel sheet surface (surface layer part) increases by 0.003 mass% or more, preferably 0.005 mass% or more, more preferably 0.007 mass% or more. Even if the nitrogen (N) content exceeds 0.030 mass%, the effect becomes saturated, so the nitriding may also be performed to give 0.030 mass% or less.

The conditions of the nitriding are not particularly limited, but the nitriding may be performed under known conditions. For example, if performing the nitriding after holding steel sheet under a degree of oxidation ($PH_2O/PH_2$) of 0.01 to 0.15 at 750 to 900°C for 10 to 600 seconds, the nitriding is performed by holding in an atmosphere containing ammonia in the process of temperature decrease without cooling the cold rolled steel sheet down to room temperature. It is preferable to make the degree of oxidation ($PH_2O/PH_2$) in the process of temperature decrease 0.0001 to 0.01 in range. If performing the nitriding while holding the degree of oxidation ($PH_2O/PH_2$) at 0.01 to 0.15 at 750 to 900°C for 10 to 600 seconds, ammonia may be introduced in the atmospheric gas of this degree of oxidation.

<Annealing Separator Coating Step>

In the annealing separator coating step, the decarburized annealed sheet is coated with an annealing separator containing $Al_2O_3$ and MgO and the coated annealing separator is made to dry.

If the annealing separator contains MgO and does not contain $Al_2O_3$, at the finish annealing step, a forsterite coating is formed on the steel sheet. On the other hand, if the annealing separator contains $Al_2O_3$ and does not contain MgO, mullite ($3Al_2O_3 \cdot 2SiO_2$) is formed on the steel sheet. This mullite becomes an obstacle to domain wall movement, so becomes a cause behind deterioration of the magnetic properties of the grain-oriented electrical steel sheet.

For this reason, by including, as the annealing separator, $Al_2O_3$ and MgO and MgO/(MgO+$Al_2O_3$) and making the mass ratio MgO/(MgO+$Al_2O_3$) of MgO 5 to 50%, after the finish annealing, the steel sheet surface is not formed with a forsterite coating. Further, mullite is formed in a small amount, but is removed at the annealing separator removal step while in the powder state and does not remain on the steel sheet surface, so a smooth surface steel sheet can be obtained.

If the MgO ratio MgO/(MgO+$Al_2O_3$) is too small, a large amount of mullite is formed and part remains on the steel sheet surface, so the core loss deteriorates, therefore the ratio is made 5% or more. Preferably, the MgO ratio MgO/(MgO+$Al_2O_3$) may be 7% or more, 9% or more, or 10% or more. On the other hand, if the MgO ratio MgO/(MgO+$Al_2O_3$) is too large, forsterite is formed, so the core loss deteriorates, therefore the ratio is made 50% or less. Preferably, the MgO ratio MgO/(MgO+$Al_2O_3$) may be 48% or less, 46% or less, 44% or less, 42% or less, or 40% or less.

Further, if the hydration water content of the annealing separator is too great, the secondary recrystallization becomes unstable, during the finish annealing, the steel sheet surface is oxidized ($SiO_2$ is formed), and sometimes flattening of the steel sheet surface becomes difficult, so the hydration water content of the annealing separator is made 1.5 mass% or less.

The annealing separator is coated on the steel sheet surface by an aqueous slurry coating or electrostatic coating etc. At the annealing separator coating step, furthermore, manganese nitride, iron nitride, or chromium nitride or other nitride breaking down in the finish annealing step before secondary recrystallization and nitriding the decarburized annealed sheet may added to the annealing separator.

<Finish Annealing Step>

The decarburized annealed sheet on which the annealing separator was coated is finish annealed to obtain a finish annealed steel sheet. The decarburized annealed sheet on which the annealing separator was coated is finish annealed to cause secondary recrystallization to proceed and control the crystal orientation to the Goss orientation ({110} <001>orientation).

At the time of finish annealing, if the furnace atmosphere contains hydrogen, the degree of oxidation ($PH_2O/PH_2$) is made 0.0001 to 0.2000, while if it does not contain hydrogen but is comprised of an inert gas (nitrogen, argon, etc.), the dew point is made 0°C or less. By doing this, it is possible to stably realize secondary recrystallization and raise the degree of control of the orientation.

If the furnace atmosphere contains hydrogen, if the degree of oxidation is too small, the dense surface silica coating ($SiO_2$ coating) formed by the decarburization annealing is reduced before the secondary recrystallization of the finish annealing and the secondary recrystallization becomes unstable, so the degree of oxidation is made 0.0001 or more. Preferably, the degree of oxidation may be 0.0005 or more, 0.0010 or more, 0.0020 or more, or 0.0050 or more. Furthermore, to form the $SiO_2$ internal oxidation layer at the steel sheet surface and, furthermore, make the asperity structure (asperity height) between the internal oxidation layer and the steel sheet a predetermined magnitude, the degree of oxidation ($PH_2O/PH_2$) in the 800°C to 900°C temperature region at the temperature raising step of the finish annealing may be made 0.0050 or more. Preferably, it is made 0.0060 or more, 0.0070 or more, 0.0080 or more, 0.0090 or more, or 0.0100 or more.

On the other hand, if the degree of oxidation is too large, decomposition of the AlN, (Al,Si)N, or other inhibitor is promoted and the secondary recrystallization becomes unstable, so the degree of oxidation is made 0.2000 or less. Preferably, the degree of oxidation may be made 0.1900 or less, 0.1800 or less, 0.1700 or less, 0.1600 or less, or 0.1500 or less.

Further, if the furnace atmosphere does not contain hydrogen, that is, if the furnace atmosphere is an inert gas, if the dew point is too high, decomposition of the AlN, (Al,Si)N, or other inhibitor is promoted and the secondary recrystallization becomes unstable, so the dew point is made 0°C or less. Preferably, the dew point may be made -5°C or less or -10°C or less. Furthermore, to form the $SiO_2$ internal oxidation layer at the steel sheet surface and, furthermore, make the asperities between the internal oxidation layer and the steel sheet surface a predetermined magnitude, the dew point may be made -20°C or more, preferably -18°C or more, -16°C or more, or 15°C or more.

<Annealing Separator Removal Step>

At the annealing separator removal step, the annealing separator is removed from the surface of the steel sheet after the finish annealing (finish annealed steel sheet) by a method including one or both of rinsing or pickling.

If the excess annealing separator at the steel sheet surface is insufficiently removed, the lamination factor deteriorates and the performance as a core ends up falling.

To remove the excess annealing separator, in addition to rinsing and pickling, a scraper may be used for removal. By using a scraper, it is possible to reliably remove the excess annealing separator causing poorer wettability at the insulating coating formation step.

Further, if performing pickling to remove the excess annealing separator, it is preferable to use a solution containing one or more of sulfuric acid, nitric acid, hydrochloric acid, phosphoric acid, chloric acid, chrome oxide aqueous solution, chromium sulfate, permanganate, peroxosulfuric acid and peroxophosphoric acid in a total of 20 wt% or less, preferably 10 wt% or less. By using such a solution, it is possible to efficiently remove excess annealing separator from the steel sheet surface.

Further, if performing pickling, the temperature of the solution is preferably made 20 to 80°C. By making the solution temperature the above range, it is possible to efficiently remove excess annealing separator from the steel sheet surface.

<Insulating Coating Formation Step>

At the insulating coating formation step, the surface of the finish annealed steel sheet after the annealing separator removal step is formed with an insulating coating. This insulating coating imparts tension to the grain-oriented electrical steel sheet to thereby cause the core loss of the steel sheet by itself to fall. Along with this, when using the grain-oriented electrical steel sheets stacked, electrical insulation between the steel sheets is secured whereby the core loss of the core is made to fall.

The type of the insulating coating is not particularly limited, but, for example, the coating is formed by coating a coating solution of an insulating coating mainly comprised of at least one of a phosphate or colloidal silica, baking it at 350 to 600°C, then heat treating it at a 800 to 1000°C temperature.

The colloidal silica is not particularly limited to colloidal silica having specific properties. The particle size is also not particularly limited to any specific particle size, but 200 nm (number average particle size) or less is preferable. For example, the size may be 5 to 30 nm. If the particle size is more than 200 nm, sometimes this precipitates in the coating solution. Further, the coating solution may further contain chromic anhydride or a chromate. As the phosphate, a phosphate of Ca, Al, Sr, etc. is preferable. Among these as well, aluminum phosphate is more preferable.

If the baking temperature of the insulating coating is too low, the insulating coating drips off while the sheet is running and becomes a cause of defective appearance and an insulating coating having sufficient adhesion is not obtained, so the temperature is made 350°C or more. Preferably it is 370°C or more or 400°C or more. Further, if the baking temperature of the insulating coating is too high, the heating speed becomes too fast, so curing proceeds only at the surface-most layer of the insulating coating while internal curing is slower, so this becomes a cause of poor coating formation and the coating adhesion becomes insufficient, so the temperature is made 600°C or less. Preferably, it may be 580°C or less, 560°C or less, or 540°C or less. The heating speed up to the baking temperature is preferably made 100°C/s or less, preferably 70°C/s or less, 50°C/s or less, or 30°C/s or less. By making the heating speed at the time of baking slower, it is possible to sufficiently make the coating constituents harden.

For example, the steel sheet may be held at a 350°C or more and 600°C or less temperature region for 2.5 seconds or more and 100 seconds or less. The degree of oxidation of the atmosphere at this time need only be 0.01 or more for forming an $SiO_2$ intermediate layer if the furnace atmosphere contains hydrogen, but to form the $SiO_2$ intermediate layer sufficiently thick, for example, the degree of oxidation at the time of baking may be 1.00 or more, preferably may be 1.50 or more, 1.60 or more, 1.70 or more, 1.80 or more, 1.90 or more, or 2.00 or more. On the other hand, if the degree of oxidation is too great, the $SiO_2$ intermediate layer in the steel sheet and the internal oxidation proceed too much, so, for example, the degree of oxidation may be 4.00 or less, preferably 3.50 or less or 3.00 or less. If the furnace atmosphere does not contain hydrogen, the dew point temperature of the atmosphere may be made 0°C or more and 50°C or less.

Further, if the heat treatment temperature after baking is too low, poor coating formation (poor curing) results and the coating adhesion becomes insufficient, so the heat treatment temperature after baking is made 800°C or more. Preferably, it may be made 820°C or more or 850°C or more. Further, if the heat treatment temperature after baking is too high, the phosphate decomposes and poor coating formation results and the coating adhesion becomes insufficient, so it is made 1000°C or less. Preferably, it may be made 970°C or less or 950°C or less. The heat treatment temperature after baking may be held at a predetermined temperature region for 10 to 300 seconds.

At the time of formation of the coating, by making the degree of oxidation ($PH_2O/PH_2$) of the atmosphere at the heat treatment after baking 0.01 to 1.50, it becomes possible to form an insulating coating without allowing the phosphate to break down more than necessary, so this is preferable. If the degree of oxidation is too low, the $SiO_2$ intermediate layer becomes thinner, so the degree of oxidation may be made 0.01 or more, preferably 0.05 or more, 0.10 or more, 0.15 or more, or 0.20 or more. On the other hand, if the degree of oxidation is too high, not only does the $SiO_2$ intermediate layer become too thick, but also internal oxidation of the steel sheet proceeds too much, so this may be made 1.50 or less, preferably 1.40 or less, 1.20 or less, or 1.00 or less. Further, the degree of oxidation at the heat treatment after baking is preferably lower than the degree of oxidation at the time of baking.

The coating solution for forming the insulating coating can, for example, be coated on the steel sheet surface by a roll coater or other wet coating method.

As explained above, the coating solution is preferably coated to give an insulating coating thickness of 3 to 30 $\mu$m.

The $SiO_2$ intermediate layer formed between the base steel sheet and the insulating coating is formed at the time of baking the insulating coating and during heat treatment after baking.

Alternatively, the $SiO_2$ intermediate layer may be formed on the base steel sheet surface by heat treatment before coating the coating solution of the insulating coating. In this case, the formation of the $SiO_2$ intermediate layer and formation of the insulating coating become different steps.

If an $SiO_2$ intermediate layer is not formed, adhesion of the insulating coating and base steel sheet cannot be secured and sometimes the insulating coating will peel off, so this is not preferable.

The insulating coating has the function of imparting tension to the steel sheet by the difference in the coefficient of thermal expansion from the base steel sheet in the process of being cooled to room temperature after formation by high temperature heat treatment. For this reason, stress occurs between the base steel sheet and the insulating coating and sometimes the coating adhesion deteriorates.

On the other hand, in heatproof magnetic domain controlled grain-oriented electrical steel sheet forming grooves in the base steel sheet, making the tension applied to the base steel sheet higher enables the effect of magnetic domain control to be enjoyed more, but there was the issue that if making the tension higher, the possibility of the coating becoming easier to peel off increased. The inventors discovered that even if forming grooves in the base steel sheet and raising the insulating coating tension by lasering, due to the provision of the $SiO_2$ intermediate layer, the effect can be obtained of suppressing a drop in coating adhesion. The mechanism for this is not necessarily clear, but it is postulated that at the surface where the grooves are formed, the coating adhesion is improved due to the relief shape of the grooves. On the other hand, it is postulated that at the surface opposite to where the grooves are formed, the slight waviness of the steel sheet shape formed at the time of lasering contributes to improvement of adhesion.

<Magnetic Domain Control Step>

In the present grain-oriented electrical steel sheet, a magnetic domain control step is provided at any of between the cold rolling step and decarburization annealing step, between the decarburization annealing step (or the decarburization nitriding step) and the annealing separator coating step, between the annealing separator removal step and the insulating coating formation step, or after the insulating coating formation step.

Magnetic domain control can form grooves in the steel sheet surface to decrease more the core loss of the grain-oriented electrical steel sheet.

<Method of Formation of Grooves>

The method of formation of the grooves is not particularly limited. With pressing, rolling, or other mechanical method, there is a possibility of deformation of the steel sheet shape, so it is preferable to employing etching, lasering, or other method. The method of formation of the grooves by lasering will be explained hereafter.

<Lasering Conditions>

By lasering the cold rolled steel sheet, a plurality of grooves are formed on the steel sheet surface in a direction perpendicular to the rolling direction to give each a groove width W, groove depth D, and predetermined pitch (groove pitch P) becoming the prescribed ranges. Among the lasering conditions, the type of the laser source, laser output, laser scan speed, and speed of movement of the steel sheet at the time of lasering are not particularly limited, but conditions giving the groove width W, groove depth D, and predetermined pitch (groove pitch P) in the prescribed ranges may be suitably selected.

[Laser Source]

As a laser source, for example, a fiber laser, YAG laser, semiconductor laser, $CO_2$ laser, or other high output laser generally used for industrial purposes can be used. If possible to stably form grooves, a pulse laser or a continuous wave laser is also possible.

[Laser Output]

If the laser output is less than 200W, the laser scan speed for forming the desired grooves remarkably falls and the industrial productivity falls, so the output may be made 200W or more. Preferably it may be 1000W or more, more preferably 1500W or more. Further, if the laser output is more than 3000W, the required power capacity becomes greater and the capital costs become tremendous, so this is not industrially practical, therefore the output may be made 3000W or less. Preferably it may be 2800W or less, more preferably 2500W or less.

[Laser Scan Speed]

If the laser scan speed is a slow one of less than 5 m/s, the running speed of the steel sheet has to be slowed and the productivity falls, so the speed is made 5 m/s or more. Preferably, it may be made 20 m/s or more, more preferably 40 m/s or more. Further, if the laser scan speed is a fast one of more than 100 m/s, a higher output becomes necessary to that extent and the capital costs increase, so the speed may be made 100 m/s or less. Preferably it may be 80 m/s or less, more preferably 60 m/s or less.

[Laser Beam Focused Spot Shape]

The focused spot shape of the laser beam is not particularly limited. It may be made circular or elliptical at the base steel sheet surface. To prevent it from becoming too broad, for example, the ratio (dL/dC) between the focused spot size dL of the laser beam in the rolling direction and the focused spot size dC of the laser beam in the sheet width direction should satisfy 0.01 to 100.

<Assist Gas>

At the same time as firing the laser beam, assist gas may be blown at portions of the steel sheet being hit by the laser beam. The assist gas acts to remove from the steel sheet the constituents melted or evaporated by lasering. By blowing the assist gas, the laser beam stably reaches the steel sheet, so grooves are stably formed. The flow rate of the assist gas is, for example, 10 to 1000 liters per minute. Further, the assist gas is preferably air or an inert gas.

EMBODIMENTS

<Embodiment 1>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was employed as a material. Using known methods, this was hot rolled, then the hot rolled sheet was annealed then cold rolled to obtain steel sheets A1 to A12 and a1 to a12 having final sheet thicknesses of 0.22 mm.

Next, in each of A1 to A12 and a5 to a12, the cold rolled steel sheet was decarburized and then further nitrided. The decarburization conditions were made raising the temperature up to 850°C, then holding for 60 seconds and cooling. The decarburization atmosphere was made a hydrogen-nitrogen atmosphere and the $PH_2O/PH_2$ was made 0.1. The amount of nitriding was made 200 ppm. Further, in each of a1 to a4, the cold rolled steel sheet was decarburized and further was nitrided. The decarburization conditions were made raising the temperature up to 850°C, then holding for 60 seconds and cooling. The decarburization atmosphere was made a hydrogen-nitrogen atmosphere and the $PH_2O/PH_2$ was made 0.3. Further, the amount of nitriding was made 200 ppm.

After that, in each of A1 to A12 and a5 to a12, an annealing separator mainly comprised of alumina ($Al_2O_3$) with an $MgO/(MgO+Al_2O_3)$ of 40% was coated to give a coated amount per side of 4 g/m$^2$. In each of a1 to a4, magnesia (MgO) was coated as an annealing separator to give a coated amount per side of 4 g/m$^2$.

Continuing, each steel sheet was wound up into a coil shape then was held in a nitrogen atmosphere containing hydrogen in 5% at a maximum temperature of 1200°C for 20 hours, then cooled to obtain a finish annealed sheet. The degree of oxidation $PH_2O/PH_2$ at the 800°C to 900°C temperature region at the temperature raising step of the finish annealing was made 0.010. After that, the excess annealing separator of the steel sheet surface was removed.

Next, a water-based coating solution mainly comprised of a phosphate and colloidal silica (insulating coating forming solution) was coated on each steel sheet, then the steel sheet on which the insulating coating forming solution was coated was heated in an atmosphere adjusted to a furnace degree of oxidation ($PH_2O/PH_2$) of 2.00 by a 20°C/s heating speed until 500°C to bake and harden the insulating coating. After this, the steel sheet was annealed after baking at 850°C (soaked) to form an insulating coating. In this embodiment, aluminum phosphate was used. The particle size of the colloidal silica (average particle size based on number) was made 100 nm. This was adjusted to give a furnace degree of oxidation ($PH_2O/PH_2$) in the annealing after baking of 1.00. For the coating thickness of the insulating coating, the coating thickness after forming the coating was measured. The particulars of the insulating coating are shown in Table 1.

As the magnetic domain control step, grooves were formed by etching or laser at any of between the cold rolling step and decarburization annealing step, between the decarburization annealing step and the annealing separator coating step, between the annealing separator removal step and insulating coating formation step, or after the insulating coating formation step. The particulars of the grooves are shown in Table 1.

In each of A1 to A12 and a1 to a12, the core loss W17/50 (energy loss measured under conditions of 1.7T, 50Hz excitation) was measured. The results are shown in Table 1.

[Table 1]

| Ex | No. | Forsterite coating Yes/No | SiO$_2$ intermediate layer Yes/No | Tension coating | | | Grooves | | | | | | | Base steel sheet | | Magnetic properties | |
|---|---|---|---|---|---|---|---|---|---|---|---|---|---|---|---|---|---|
| | | | | Tension coating Yes/No | Coating tension (MPa) | Coating thickness (μm) | Grooves Yes/No | Groove forming step | Groove forming method | Groove angle θ (°) | Groove width W (μm) | Groove depth D (μm) | Groove pitch P (mm,) | Internal oxidation layer Yes/No | Asperity height (μm) | Magnetic flux density B8 (T) | Core loss W17/50 (W/kg) |
| | A1 | No | Yes | Yes | 10 | 6 | Yes | Cold rolled sheet | Laser | 5 | 40 | 40 | 3 | Yes | 0.013 | 1.812 | 0.595 |
| | A2 | No | Yes | Yes | 11 | 7 | Yes | Cold rolled sheet | Laser | 5 | 40 | 40 | 3 | Yes | 0.018 | 1.811 | 0.594 |
| | A3 | No | Yes | Yes | 20 | 14 | Yes | Cold rolled sheet | Etching | 5 | 40 | 40 | 3 | Yes | 0.064 | 1.799 | 0.581 |
| | A4 | No | Yes | Yes | 12 | 8 | Yes | Decarburized nitrided sheet | Laser | 5 | 40 | 40 | 3 | Yes | 0.016 | 1.789 | 0.591 |
| | A5 | No | Yes | Yes | 14 | 9 | Yes | Decarburized nitrided sheet | Laser | 5 | 40 | 40 | 3 | Yes | 0.023 | 1.802 | 0.586 |
| Ex | A6 | No | Yes | Yes | 15 | 10 | Yes | Decarburized nitrided sheet | Laser | 5 | 40 | 40 | 3 | Yes | 0.026 | 1.804 | 0.591 |
| | A7 | No | Yes | Yes | 18 | 12 | Yes | Finish annealed sheet | Laser | 5 | 40 | 40 | 3 | Yes | 0.030 | 1.811 | 0.587 |
| | A8 | No | Yes | Yes | 17 | 12 | Yes | Finish annealed sheet | Etching | 5 | 40 | 40 | 3 | Yes | 0.038 | 1.812 | 0.588 |
| | A9 | No | Yes | Yes | 13 | 8 | Yes | Finish annealed sheet | Laser | 5 | 40 | 40 | 3 | Yes | 0.018 | 1.791 | 0.591 |
| | A10 | No | Yes | Yes | 15 | 10 | Yes | Tension coated sheet | Laser | 5 | 40 | 40 | 3 | Yes | 0.020 | 1.799 | 0.585 |
| | A11 | No | Yes | Yes | 20 | 14 | Yes | Tension coated sheet | Laser | 5 | 40 | 40 | 3 | Yes | 0.028 | 1.802 | 0.585 |
| | A12 | No | Yes | Yes | 15 | 10 | Yes | Tension coated sheet | Laser | 5 | 40 | 40 | 3 | Yes | 0.019 | 1.808 | 0.581 |

| | No. | Forsterite coating Yes/No | SiO$_2$ intermediate layer Yes/No | Tension coating | | | Grooves | | | | | | | Base steel sheet | | Magnetic properties | |
|---|---|---|---|---|---|---|---|---|---|---|---|---|---|---|---|---|---|
| | | | | Tension coating Yes/No | Coating tension (MPa) | Coating thickness (μm) | Grooves Yes/No | Groove forming step | Groove forming method | Groove angle θ (°) | Groove width W (μm) | Groove depth D (μm) | Groove pitch P (mm,) | Internal oxidation layer Yes/No | Asperity height (μm) | Magnetic flux density B8 (T) | Core loss W17/50 (W/kg) |
| Comp. ex. | a1 | Yes | No | Yes | 12 | 8 | Yes | Cold rolled sheet | Etching | 5 | 40 | 40 | 3 | - | - | 1.809 | 0.612 |
| | a2 | Yes | No | Yes | 14 | 9 | Yes | Decarburized nitrided sheet | Laser | 5 | 40 | 40 | 3 | - | - | 1.792 | 0.602 |
| | a3 | Yes | No | Yes | 13 | 8 | Yes | Finish annealed sheet | Laser | 5 | 40 | 40 | 3 | - | - | 1.799 | 0.608 |
| | a4 | Yes | No | Yes | 10 | 6 | Yes | Tension coated sheet | Laser | 5 | 40 | 40 | 3 | - | - | 1.788 | 0.611 |
| | a5 | No | Yes | Yes | 5 | 2 | Yes | Cold rolled sheet | Laser | 5 | 40 | 40 | 3 | Yes | 0.004 | 1.799 | 0.625 |
| | a6 | No | Yes | Yes | 8 | 4 | Yes | Decarburized nitrided sheet | Laser | 5 | 40 | 40 | 3 | Yes | 0.010 | 1.802 | 0.622 |
| | a7 | No | Yes | Yes | 7 | 4 | Yes | Finish annealed sheet | Laser | 5 | 40 | 40 | 3 | Yes | 0.010 | 1.811 | 0.625 |
| | a8 | No | Yes | Yes | 9 | 5 | Yes | Tension coated sheet | Laser | 5 | 40 | 40 | 3 | Yes | 0.012 | 1.813 | 0.616 |
| | a9 | No | Yes | Yes | 15 | 10 | No | - | - | - | - | - | - | Yes | 0.026 | 1.821 | 0.612 |
| | a10 | No | Yes | Yes | 16 | 11 | No | - | - | - | - | - | - | Yes | 0.022 | 1.811 | 0.611 |
| | a11 | No | Yes | Yes | 16 | 11 | No | - | - | - | - | - | - | Yes | 0.024 | 1.799 | 0.617 |
| | a12 | No | Yes | Yes | 16 | 11 | No | - | - | - | - | - | - | Yes | 0.022 | 1.789 | 0.615 |

In Invention Examples A1 to A12 and Comparative Examples a1 to a8, the conditions of the groove angles, groove depths, groove pitches, and groove widths affecting the core loss were all the same. The magnetic flux density were all of the same extents while in Invention Examples A1 to A12, the core losses were less than 0.600W/kg or good values. The coating tensions at that time were all 10 MPa or more.

Comparative Examples a1 to a4 were grain-oriented electrical steel sheets having glass coatings. The coating tensions were 10 MPa or more and the groove shapes were the same as Invention Examples A1 to A12, but the core losses were higher than the invention examples and inferior.

<Embodiment 2>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was employed as a material. Using known methods, this was hot rolled, then the hot rolled sheet was annealed then cold rolled to obtain steel sheets B1 to B12 having final sheet thicknesses of 0.22 mm.

Continuing, each cold rolled steel sheet was decarburized and further was nitrided. The decarburization conditions were made raising the temperature up to 850°C, then holding for 60 seconds and cooling. The decarburization atmosphere was made a hydrogen-nitrogen atmosphere and the $PH_2O/PH_2$ was made 0.1. Further, the amount of nitriding was made 200 ppm.

After that, an annealing separator mainly comprised of alumina ($Al_2O_3$) with an MgO/(MgO+$Al_2O_3$) of 40% was coated to give a coated amount per side of 4 g/m$^2$.

Continuing, each steel sheet was wound up into a coil shape then, under conditions similar to the Embodiment 1, was held at a maximum temperature of 1200°C for 20 hours, then cooled to obtain a finish annealed sheet.

Furthermore, in the same way as the Embodiment 1, an insulating coating was formed. The particulars of the insulating coating are shown in Table 2.

In the grain-oriented electrical steel sheet according to the present embodiment, grooves were formed by etching or laser at any of between the cold rolling step and decarburization annealing step, and between the decarburization annealing step and the annealing separator coating step. The particulars of the grooves are shown in Table 2.

In each of B1 to B12, the core loss W17/50 (energy loss measured under 1.7T, 50Hz excitation conditions) was measured. The results are shown in Table 2.

[Table 2]

| | No. | Forsterite coating Yes/No | SiO2 intermediate layer Yes/No | Tension coating | | | Grooves | | | | | | | Base steel sheet | | Magnetic properties | |
| | | | | Tension coating Yes/No | Coating tension (MPa) | Coating thickness (μm) | Grooves Yes/No | Groove forming step | Groove forming method | Groove angle θ (°) | Groove width W (μm) | Groove depth D (μm) | Groove pitch P (mm,) | Internal oxidation layer Yes/No | Asperity height (μm) | Magnetic flux density B8 (T) | Core loss W17/50 (W/kg) |
|---|---|---|---|---|---|---|---|---|---|---|---|---|---|---|---|---|---|
| Ex | B1 | No | Yes | Yes | 10 | 6 | Yes | Cold rolled sheet | Laser | 0 | 50 | 40 | 3 | Yes | 0.013 | 1.801 | 0.547 |
| | B2 | No | Yes | Yes | 12 | 8 | Yes | Cold rolled sheet | Laser | 40 | 50 | 45 | 3 | Yes | 0.016 | 1.802 | 0.537 |
| | B3 | No | Yes | Yes | 10 | 6 | Yes | Cold rolled sheet | Laser | 10 | 20 | 35 | 3 | Yes | 0.013 | 1.799 | 0.547 |
| | B4 | No | Yes | Yes | 10 | 6 | Yes | Cold rolled sheet | Laser | 10 | 300 | 40 | 5 | Yes | 0.012 | 1.812 | 0.541 |
| | B5 | No | Yes | Yes | 10 | 6 | Yes | Cold rolled sheet | Etching | 10 | 50 | 10 | 5 | Yes | 0.020 | 1.811 | 0.547 |
| | B6 | No | Yes | Yes | 10 | 6 | Yes | Cold rolled sheet | Etching | 10 | 50 | 50 | 5 | Yes | 0.021 | 1.809 | 0.549 |
| | B7 | No | Yes | Yes | 11 | 7 | Yes | Cold rolled sheet | Laser | 10 | 50 | 35 | 1 | Yes | 0.015 | 1.799 | 0.542 |
| | B8 | No | Yes | Yes | 11 | 7 | Yes | Decarburized nitrided sheet | Laser | 10 | 50 | 40 | 30 | Yes | 0.015 | 1.821 | 0.548 |
| | B9 | No | Yes | Yes | 10 | 6 | Yes | Decarburized nitrided sheet | Laser | 10 | 40 | 45 | 5 | Yes | 0.014 | 1.822 | 0.537 |
| | B10 | No | Yes | Yes | 15 | 10 | Yes | Decarburized nitrided sheet | Laser | 10 | 40 | 35 | 5 | Yes | 0.026 | 1.823 | 0.529 |
| | B11 | No | Yes | Yes | 16 | 11 | Yes | Decarburized nitrided sheet | Laser | 10 | 50 | 30 | 5 | Yes | 0.027 | 1.801 | 0.521 |
| | B12 | No | Yes | Yes | 13 | 8 | Yes | Decarburized nitrided sheet | Laser | 10 | 50 | 45 | 5 | Yes | 0.018 | 1.819 | 0.541 |

In each of Invention Examples B1 to B12, the core loss was less than 0.550W/kg and was further excellent. The coating tension at that time was 10 MPa or more in each case, the absolute value of the angle θ formed with the longitudinal direction of the groove was 0 to 40°, the width W of the groove was 20 to 300 μm, the depth D of the groove was 10 to 50 μm, and the pitch P of the grooves in the rolling direction was 1 to 30 mm.

<Embodiment 3>

A slab containing Si: 3.3 mass%, Mn: 0.10 mass%, S: 0.006 mass%, C: 0.060 mass%, acid soluble Al: 0.027 mass%, and N: 0.008 mass% and having a balance of Fe and impurities was employed as a material. Using known methods, this was hot rolled, then the hot rolled sheet was annealed then cold rolled to obtain steel sheets C1 to C16 having final sheet thicknesses of 0.22 mm.

Continuing, each cold rolled steel sheet was decarburized and then further nitrided. The decarburization conditions were made raising the temperature up to 850°C, then holding for 60 seconds and cooling. The decarburization atmosphere was made a hydrogen-nitrogen atmosphere and the $PH_2 O/PH_2$ was made 0.1. The amount of nitriding was made 200 ppm.

After that, an annealing separator mainly comprised of alumina ($Al_2 O_3$) with an $MgO/(MgO+Al_2 O_3)$ of 40% was coated to give a coated amount per side of 4 g/m$^2$.

Continuing, each steel sheet was wound up into a coil shape, held at a maximum temperature of 1200°C for 20 hours, then cooled under similar conditions as the Embodiments 1 and 2 to obtain a finish annealed sheet.

Furthermore, in the same way as the Embodiments 1 and 2, an insulating coating was formed. The particulars of the insulating coating are shown in Table 3.

Grooves were formed by etching or laser at any of between the cold rolling step and decarburization annealing step, between the decarburization annealing step and the annealing separator coating step, between the annealing separator removal step and insulating coating formation step, or after the insulating coating formation step. The particulars of the grooves are shown in Table 3.

In each of C1 to C16, the core loss W17/50 (energy loss measured under 1.7T, 50Hz excitation conditions) was measured. The results are shown in Table 3.

[Table 3]

| | No. | Forsterite coating Yes/No | SiO2 intermediate layer Yes/No | Tension coating | | | Grooves | | | | | | | Base steel sheet | | Magnetic properties | |
|---|---|---|---|---|---|---|---|---|---|---|---|---|---|---|---|---|---|
| | | | | Tension coating Yes/No | Coating tension (MPa) | Coating thickness (μm) | Grooves Yes/No | Groove forming step | Groove forming method | Groove angle θ (°) | Groove width W (μm) | Groove depth D (μm) | Groove pitch P (mm,) | Internal oxidation layer Yes/No | Asperity height (μm) | Magnetic flux density B8 (T) | Core loss W17/50 (W/kg) |
| Ex | C1 | No | Yes | Yes | 12 | 8 | Yes | Cold rolled sheet | Laser | 10 | 50 | 45 | 3 | Yes | 0.015 | 1.801 | 0.561 |
| | C2 | No | Yes | Yes | 10 | 6 | Yes | Cold rolled sheet | Laser | 10 | 50 | 45 | 3 | Yes | 0.012 | 1.778 | 0.521 |
| | C3 | No | Yes | Yes | 11 | 7 | Yes | Cold rolled sheet | Etching | 10 | 50 | 45 | 3 | Yes | 0.024 | 1.808 | 0.571 |
| | C4 | No | Yes | Yes | 12 | 8 | Yes | Cold rolled sheet | Etching | 10 | 50 | 45 | 3 | Yes | 0.026 | 1.811 | 0.588 |
| | C5 | No | Yes | Yes | 11 | 7 | Yes | Decarburized nitrided sheet | Laser | 10 | 50 | 45 | 3 | Yes | 0.014 | 1.799 | 0.575 |
| | C6 | No | Yes | Yes | 11 | 7 | Yes | Decarburized nitrided sheet | Laser | 10 | 50 | 45 | 3 | Yes | 0.013 | 1.789 | 0.574 |
| | C7 | No | Yes | Yes | 15 | 10 | Yes | Decarburized nitrided sheet | Etching | 10 | 50 | 45 | 3 | Yes | 0.028 | 1.802 | 0.566 |
| | C8 | No | Yes | Yes | 17 | 12 | Yes | Decarburized nitrided sheet | Etching | 10 | 50 | 45 | 3 | Yes | 0.041 | 1.804 | 0.572 |
| | C9 | No | Yes | Yes | 16 | 11 | Yes | Finish annealed sheet | Laser | 10 | 50 | 45 | 3 | Yes | 0.027 | 1.811 | 0.577 |
| | C10 | No | Yes | Yes | 15 | 10 | Yes | Finish annealed sheet | Laser | 10 | 50 | 45 | 3 | Yes | 0.026 | 1.812 | 0.591 |
| | C11 | No | Yes | Yes | 18 | 12 | Yes | Finish annealed sheet | Etching | 10 | 50 | 45 | 3 | Yes | 0.038 | 1.821 | 0.581 |
| | C12 | No | Yes | Yes | 15 | 10 | Yes | Finish annealed sheet | Etching | 10 | 50 | 45 | 3 | Yes | 0.029 | 1.811 | 0.587 |
| | C13 | No | Yes | Yes | 15 | 10 | Yes | Tension coated sheet | Laser | 10 | 50 | 45 | 3 | Yes | 0.025 | 1.804 | 0.572 |
| | C14 | No | Yes | Yes | 18 | 12 | Yes | Tension coated sheet | Laser | 10 | 50 | 45 | 3 | Yes | 0.029 | 1.811 | 0.577 |

| No. | Forsterite coating Yes/No | SiO2 intermediate layer Yes/No | Tension coating | | | Grooves | | | | | | | | Base steel sheet | | Magnetic properties | |
|---|---|---|---|---|---|---|---|---|---|---|---|---|---|---|---|---|---|
| | | | Tension coating Yes/No | Coating tension (MPa) | Coating thickness ($\mu$m) | Grooves Yes/No | Groove forming step | Groove forming method | Groove angle $\theta$ (°) | Groove width W ($\mu$m) | Groove depth D ($\mu$m) | Groove pitch P (mm,) | Internal oxidation layer Yes/No | Asperity height ($\mu$m) | Magnetic flux density B8 (T) | Core loss W17/50 (W/kg) |
| C15 | No | Yes | Yes | 18 | 12 | Yes | Tension coated sheet | Etching | 10 | 50 | 45 | 3 | Yes | 0.040 | 1.791 | 0.532 |
| C16 | No | Yes | Yes | 16 | 11 | Yes | Tension coated sheet | Etching | 10 | 50 | 45 | 3 | Yes | 0.035 | 1.788 | 0.542 |

In each of Invention Examples C1 to C16, the core loss is an excellent one of less than 0.600W/kg.

[INDUSTRIAL APPLICABILITY]

The present invention can be utilized for, for example, wound cores for transformers and other industrial equipment utilizing grain-oriented electrical steel sheet.

REFERENCE SIGNS LIST

1 steel sheet
2 groove
$\Theta$ groove angle
W groove width
D groove depth
d groove pitch
10 base steel sheet
11 internal oxidation layer
12 $SiO_2$ intermediate layer
13 insulating coating
14 asperity height
15 interface curve
16 line connecting front end parts of interface curve at steel sheet surface side
17 line connecting front end parts of interface curve at steel sheet center side

**Claims**

1. Grain oriented electrical steel sheet steel having a plurality of grooves in a surface of the sheet,

   having an $SiO_2$ intermediate layer and insulating coating in that order on the surface of the steel sheet as a base material,
   not having a forsterite coating, and
   having a coating tension of the insulating coating of 10 MPa or more.

2. The grain-oriented electrical steel sheet according to claim 1, wherein, in each of the grooves,

   an absolute value of an angle $\theta$ formed by a direction perpendicular to a rolling direction and a sheet thickness direction of the steel sheet and a longitudinal direction of the groove is 0 to 40°,
   a width W of the groove is 20 to 300 $\mu$m,
   a depth D of the groove is 10 to 50 $\mu$m, and
   a pitch P of the grooves in the rolling direction is 1.0 to 30.0 mm.

3. The grain-oriented electrical steel sheet according to claim 1 or claim 2, having an $SiO_2$ internal oxidation layer right under the surface of the steel sheet as the base material.

4. The grain-oriented electrical steel sheet according to any one of claims 1 to 3, wherein in a sheet thickness direction cross-section of the steel sheet, an asperity height of the interface of the $SiO_2$ internal oxidation layer and the steel sheet as the base material is 0.001 $\mu$m or more and 0.100 $\mu$m or less in the sheet thickness direction of the steel sheet.

Fig. 1

EP 4 613 895 A1

# Fig. 2

## INTERNATIONAL SEARCH REPORT

| International application No. |
|---|
| **PCT/JP2023/039510** |

### A. CLASSIFICATION OF SUBJECT MATTER

*C22C 38/00*(2006.01)i; *C23C 22/00*(2006.01)i; *H01F 1/147*(2006.01)i; *C21D 8/12*(2006.01)n; *C21D 9/46*(2006.01)n; *C22C 38/60*(2006.01)n

FI: C22C38/00 303U; C23C22/00 B; H01F1/147 183; C21D8/12 D; C22C38/60; C21D9/46 501B

According to International Patent Classification (IPC) or to both national classification and IPC

### B. FIELDS SEARCHED

Minimum documentation searched (classification system followed by classification symbols)

C22C38/00-C22C38/60; C23C22/00; H01F1/147; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2002-309381 A (NIPPON STEEL CORP) 23 October 2002 (2002-10-23) claims, paragraphs [0042]-[0044], table 4 | 1-3 |
| A | | 4 |
| X | JP 2003-301272 A (NIPPON STEEL CORP) 24 October 2003 (2003-10-24) claims, paragraphs [0001]-[0006], [0008]-[0021], table 1 | 1-3 |
| A | | 4 |
| A | JP 8-3648 A (NIPPON STEEL CORP) 09 January 1996 (1996-01-09) claims, paragraphs [0011]-[0026] | 1-4 |
| A | JP 6-184762 A (NIPPON STEEL CORP) 05 July 1994 (1994-07-05) entire text, all drawings | 1-4 |
| A | JP 2015-86426 A (JFE STEEL CORP) 07 May 2015 (2015-05-07) entire text | 1-4 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/039510**

| C. | DOCUMENTS CONSIDERED TO BE RELEVANT | |
|---|---|---|
| Category* | Citation of document, with indication, where appropriate, of the relevant passages | Relevant to claim No. |
| A | JP 2001-26847 A (KAWASAKI STEEL CORP) 30 January 2001 (2001-01-30)<br>entire text, all drawings | 1-4 |
| A | CN 114561512 A (WUHAN STEEL CO., LTD.) 31 May 2022 (2022-05-31)<br>entire text, all drawings | 1-4 |

Form PCT/ISA/210 (second sheet) (July 2022)

**INTERNATIONAL SEARCH REPORT**
Information on patent family members

International application No.

**PCT/JP2023/039510**

| Patent document cited in search report | | | Publication date (day/month/year) | Patent family member(s) | | | Publication date (day/month/year) |
|---|---|---|---|---|---|---|---|
| JP | 2002-309381 | A | 23 October 2002 | (Family: none) | | | |
| JP | 2003-301272 | A | 24 October 2003 | (Family: none) | | | |
| JP | 8-3648 | A | 09 January 1996 | (Family: none) | | | |
| JP | 6-184762 | A | 05 July 1994 | US entire text, all drawings EP DE KR | 5961744 565029 69326792 10-1993-0021822 | A A1 T2 A | |
| JP | 2015-86426 | A | 07 May 2015 | US entire text WO EP CN KR RU | 2016/0260531 2015/064472 3064607 105593393 10-2016-0044561 2016121005 | A1 A1 A1 A A A | |
| JP | 2001-26847 | A | 30 January 2001 | (Family: none) | | | |
| CN | 114561512 | A | 31 May 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49096920 A
- WO 2002088403 A
- JP 62053579 B
- WO 2020149321 A